# EUROPEAN PATENT SPECIFICATION

(11) **EP 4 159 487 B1**
(45) Date of publication and mention of the grant of the patent: **06.11.2024**
(21) Application number: 22198164.0
(22) Date of filing: 27.09.2022
(51) Int. Cl.: B60C 17/00, B60C 9/28, B60C 9/22, B60C 9/18, B60C 9/20

(54) **WRAPAROUND STRUCTURE FOR A BELT PACKAGE OF A TIRE**
UMHÜLLUNGSSTRUKTUR FÜR EINE GÜRTELPACKUNG EINES REIFENS
STRUCTURE ENVELOPPANTE POUR UN EMBALLAGE DE CEINTURE DE PNEUMATIQUE

(30) Priority: 30.09.2021 US 202117490335
(43) Date of publication of application: 05.04.2023
(73) Proprietor: The Goodyear Tire & Rubber Company, Akron, OH 44316 (US)
(72) Inventor: JACQUES, Olivier Guy, L-9170 Mertzig (LU); HOSKER, Nigel Carl, L-7433 Grevenknapp (LU); DE WIT, Hendrikus Lambertus Johannes Maria, L-9283 Diekirch (LU)
(74) Representative: Kutsch, Bernd

(56) References cited:
- EP-A1- 3 181 376
- US-A1- 2010 084 069
- US-A1- 2013 153 110
- US-A1- 2013 248 075

## Description

### Field of the Invention

The present invention is directed towards a pneumatic or a non-pneumatic tire. More specifically, the present invention is directed towards a belt package for a tire wherein a wraparound structure for belt package improves tire durability and tread wear uniformity.

### Background of the Invention

A continuing goal of the tire industry is the improvement of the performance of tires. Desirable characteristics for tires may be light weight, low drag, good traction, minimal runout, low noise, good handling, low treadwear, and/or low rolling resistance. Further, the tire industry strives for tire constructions well-suited for specific conditions and uses. Optimization of handling using one construction, and high-speed durability using another construction, may be one method for addressing a specific condition. Light weight tires with improved and/or maintained physical properties and optimization for different conditions are desirable goals for tire designers.

US 2010/0084069 A1 describes a tire in accordance with the preamble of claim 1.

Further tires having wrap around strips at the edges of belt plies are known from US 2013/0153110, EP 3 181 376 A1 and US 2013/0248075 A1.

### Definitions

"Apex" means an elastomeric filler located radially above the bead core and between the plies and the turnup ply.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Cord" means one of the reinforcement strands which the reinforcement structures of the tire comprise.

"Cord angle" means the acute angle, left or right in a plan view of the tire, formed by a cord with respect to the equatorial plane. The "cord angle" is measured in a cured but uninflated tire.

"Crown area" means that portion of the tire within the width limits of the tire tread.

"Equatorial plane (EP)" means the plane perpendicular to the tire's axis of rotation and passing through the center of its tread; or the plane containing the circumferential centerline of the tread.

"Lateral" means an axial direction.

"Ply" means a cord-reinforced layer of rubber-coated radially deployed or otherwise parallel cords.

"Radial" and "radially" are used to mean directions radially toward or away from the axis of rotation of the tire.

"Tread width" means the arc length of the tread surface in a plane including the axis of rotation of the tire.

### Summary of the Invention

The invention relates to a tire in accordance with claim 1 and to a method in accordance with claim 12.

Dependent claims refer to preferred embodiments of the invention.

A tire in accordance with the present invention includes a carcass ply and a belt structure disposed radially outward of the carcass ply in a crown portion of the tire. The belt structure includes a first belt ply, a second belt ply radially adjacent the first belt ply, an overlay ply radially adjacent the first belt ply, a first wrap around strip encompassing both axial edges of the first belt ply, and a second wrap around strip encompassing both axial edges of the second belt ply.

The overlay ply has an axial width less than a maximum axial width of the first belt ply and a maximum axial width of the second belt ply.

According to another preferred aspect of the tire, the first wrap around strip includes reinforcing cords.

According to yet another preferred aspect of the tire, the second wrap around strip includes reinforcing cords.

According to still another preferred aspect of the tire, the first wrap around strip includes reinforcing fibers.

According to yet another preferred aspect of the tire, the second wrap around strip includes reinforcing fibers.

According to still another preferred aspect of the tire, the first wrap around strip includes reinforcing fabric.

According to yet another preferred aspect of the tire, the second wrap around strip includes reinforcing fabric.

According to still another preferred aspect of the tire, radially outer portions of the first wrap around strips axially overlap axially outer edges of the overlay ply.

According to yet another preferred aspect of the tire, radially inner portions of the first wrap around strips axially overlap radially outer portions of the second wrap around gum strips.

A method in accordance with the present invention reinforces a crown area of a tire. The method includes the steps of: extending a carcass ply from a first bead portion to a second bead portion; placing a belt structure radially outward of the carcass ply in the crown area of the tire, the belt structure including a first belt ply, a second belt ply, an overlay ply, a first wrap around strip, and a second wrap around strip; encompassing each axial edge of the first belt ply with a first wrap around strip; encompassing each axial edge of the second belt ply with a second wrap around strip; axially overlapping each axial edge of the overlay ply with a radially outer portion of the first wrap around strip; and axially overlapping a radially inner portion of a first wrap around strip with a radially outer portion of the second wrap around strip.

The overlay ply has an axial width less than both a maximum axial width of the first belt ply and a maximum axial width of the second belt ply.

According to a preferred aspect of the method, radially outer portions of the first wrap around strips directly contact axially outer edges of the overlay ply.

According to yet another preferred aspect of the method, radially inner portions of the first wrap around strips directly contact radially outer portions of the second wrap around gum strips.

### Brief Description of the Drawings

The invention will be described by way of example and with reference to the accompanying drawings in which:
FIG. 1 is a schematic cross-sectional view of an example tire for use with the present invention; and
FIG. 2 is a schematic detailed sectional view of the tire of FIG. 1 in accordance with the present invention.

### Detailed Description of Preferred Embodiments of the Present Invention

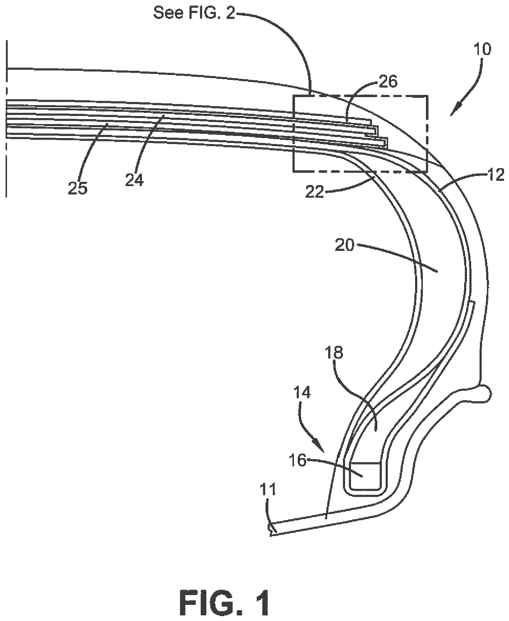

FIG. 1 is a cross-sectional view of an example tire 10, for mounting on a tire rim 11, designed to be capable of continued operation during inflated, under-inflated, and deflated conditions. One half of the cross-sectional view of the example tire 10 is shown, it being understood that, the other half may be a mirror image of that which is illustrated in FIG. 1. The example tire 10 has at least one carcass reinforcing ply 12 extending from one bead area 14 of the tire to an opposing bead area (not shown). The ends of the reinforcing ply 12 are preferably turned axially inward to axially outward about bead cores 16 and bead apexes 18. The terminal ends of the reinforcing ply 12 preferably extend past the radially outer ends of the bead apexes 18 thereby enveloping the bead apexes.

Preferably, there is a sidewall insert 20 located in each sidewall region of the example tire 10.

The insert 20 is preferably located adjacent to the tire innerliner 22 or axially outward of the reinforcing ply 12. The insert 20 is preferably formed of elastomeric material and preferably extends from the crown area, such as from radially inward of a belt structure to radially inward of the outermost terminal end of the bead apexes 18 that overlap the bead apexes 18. The elastomeric material of the insert 20 is preferably selected to provide the example tire 10 with support during underinflated and deflated operation of the tire.

In the crown area of the example tire 10, a belt structure is located radially outward of the carcass ply 12. The belt structure has at least two inclined, crossed cord belt plies 24, 25 and a radially outer overlay ply 26. The cords are preferably inclined with respect to the circumferential direction of the example tire 10 in the first belt ply 24 and the cords in the second belt ply 25 directly adjacent the first belt ply 24 are preferably inclined at similar, but opposing, angles to the cords in the first belt ply 24. These angles are preferably both in a range of from 15 to 30 degrees.

Radially outward of the crossed cord belt plies 24, 25 is the overlay ply 26. The overlay ply 26 may have a lateral width in a range of from 85 to 97 percent of the maximum lateral width of the crossed cord plies 24, 25.

Preferably, the radially inner second belt ply 25 is the laterally widest ply. The lateral width of the adjacent first belt ply 24 is preferably in a range of from 85 to 97 percent of the lateral width of the second belt ply. The lateral width of the adjacent overlay ply is preferably in a range of from 85 to 97 percent of the lateral width of the first belt ply 24.

The overlay ply 26 is preferably reinforced with cords inclined at angles between of 15° and -15°, more preferably at angles between 5° and -5° or at angles between -2° to 2°, with respect to the circumferential direction of the example tire 10.

As shown, the overlay ply 26 has a width less than a maximum width of the crossed cord plies of the belt structure 24, 25 (FIGS. 1-2).

Only one or preferably both lateral edges 242 of the first belt ply 24 are encompassed by first wrap around gum strips 244 (one shown).

Preferably, each first gum strip 244 extends on the radially upper side of the first belt ply 24 over a lateral distance of preferably 2 to 10 percent, more preferably 3 to 7 percent, of the lateral width of the first belt ply 24.

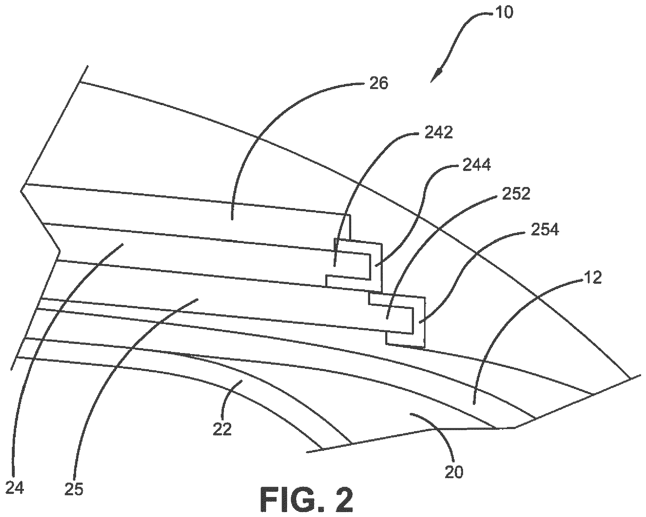

Preferably and as shown in Fig. 2, each first gum strip 244 extends on the radially outer side of the first belt ply 24 over a lateral distance that is lower, preferably 5 to 15 percent lower, than the respective distance on the radially inner side of the first belt ply 24.

Preferably and as shown in Fig. 2, each first gum strip 244 extends on the radially outer side partially under the overlay ply 26.

The overlay ply 26 is in contact with each first gum strip 244 over a lateral distance in a range of from 1 to 5 percent or from 2 to 4 percent of the lateral width of the overlay belt ply 26.

Only one or preferably both lateral edges 252 of the second belt ply 25 are encompassed by second wrap around gum strips 254 (one shown).

Preferably and as shown in Fig. 2, each second gum strip 254 extends on the radially upper side of the second belt ply 25 over a lateral distance of preferably 2 to 10 percent, more preferably 3 to 7 percent, of the lateral width of the second belt ply 25.

Preferably and as shown in Fig. 2, each second gum strip 254 extends on the radially outer side of the second belt ply 25 over a lateral distance that is higher, preferably 15 to 40 percent higher, than the respective distance on the radially inner side of the second belt ply 25.

Preferably, the radially inner side of the first gum strip 244 and the radially outer side of the second gum strip 254 are adjacent to each other and partially overlap.

Preferably and as shown in Fig. 2, each second gum strip 254 extends on the radially upper side of the second belt ply 25 laterally under the first gum strip 244 over a lateral distance in a range of from 0.5 to 3 percent of the lateral width of the first belt ply 24.

The first and second wrap around gum strips 244, 254 may or may not include reinforcement structures such as cords, fibers, short fibers, fabric, etc.

Preferably, the construction of the tire 10 is symmetrical with respect to the equatorial plane of the tire 10.

The disclosed belt/overlay construction 24, 25, 26, 244, 254 allows it to mitigate material flow in the area or the belt edges 242, 252 and to thereby prevent cords of the second belt ply 25 from directly contacting cords of the first belt ply 24 and cords of the first belt ply 24 from directly contacting cords of the overlay ply 26 there, thereby increasing durability of the crown area of the tire 10. This is of particular relevance when the tire 10 is a truck tire or when it is a self-supporting tire (run-flat tire).

As shown in FIG. 2 and as explained above, the axially outer edges of the overlay ply 26 preferably axially overlap a radially outer portion of each first wrap around gum strip 244. A radially inner portion of the first wrap around gum strips 244 preferably axially overlap a radially outer portion of each second wrap around gum strip 254. These overlaps further reinforce the axially outer edges of the crown area of the tire 10.

## Claims

1. A tire comprising a carcass ply (12) and a belt structure disposed radially outward of the carcass ply (12) in a crown portion of the tire (10), the belt structure including a first belt ply (24), a second belt ply (25) radially adjacent the first belt ply (24), an overlay ply (26) radially adjacent the first belt ply (24), wherein a first wrap around strip (244) encompasses one or both axial edges (242) of the first belt ply (24), and a second wrap around strip (254) encompasses one or both axial edges of the second belt ply (25), and wherein the overlay ply (26) has an axial width less than a maximum axial width of the first belt ply (24) and a maximum axial width of the second belt ply (25), **characterized in that** the overlay ply (26) is in contact with each first wrap around strip (244) over a lateral distance in a range of from 1 to 5 percent of the lateral width of the overlay belt ply (26).

2. The tire as set forth in claim 1, wherein the first wrap around strip (244) and/or the second wrap around strip (254) includes at least one of reinforcing cords, reinforcing fibers, or reinforcing fabric.

3. The tire as set forth in at least one of the previous claims, wherein radially outer portions of the first wrap around strip (244) axially overlap axially outer edges of the overlay ply (26).

4. The tire as set forth in at least one of the previous claims, wherein radially inner portions of the first wrap around strip (244) axially overlap radially outer portions of the second wrap around strip (254).

5. The tire as set forth in at least one of the previous claims, wherein the tire (10) is a runflat-tire and/or wherein the tire (10) includes a sidewall insert (20) to provide the tire (10) with support during underinflated and deflated operation of the tire (10).

6. The tire as set forth in at least one of the previous claims, wherein each first wrap around strip (244) extends on the radially upper side of the first belt ply (24) over a lateral distance of 2 to 10 percent, more preferably 3 to 7 percent, of the lateral width of the first belt ply (24).

7. The tire as set forth in at least one of the previous claims, wherein each first wrap around strip (244) extends on the radially outer side of the first belt ply (24) over a lateral distance that is lower, preferably 5 to 15 percent lower, than the respective distance on the radially inner side of the first belt ply (24).

8. The tire as set forth in at least one of the previous claims, wherein the overlay ply (26) is in contact with each first wrap around strip (244) over a lateral distance in a range of from 2 to 4 percent of the lateral width of the overlay belt ply (26).

9. The tire as set forth in at least one of the previous claims, wherein each second wrap around strip (254) extends on the radially upper side of the second belt ply (25) over an axial distance in a range of from 2 to 10 percent, preferably 3 to 7 percent, of the lateral width of the second belt ply (25).

10. The tire as set forth in at least one of the previous claims, wherein each second wrap around strip (254) extends on the radially outer side of the second belt ply (25) over a lateral distance that is higher, preferably 15 to 40 percent higher, than the respective distance on the radially inner side of the second belt ply (25).

11. The tire as set forth in at least one of the previous claims, wherein the radially inner side of the first wrap around strip (244) and the radially outer side of the second wrap around strip (254) are adjacent to each other and partially overlap; and/or wherein each second wrap around strip (254) extends on the radially upper side of the second belt ply (25) laterally under the first wrap around strip (244) over a lateral distance in a range of from 0.5 to 3 percent of the lateral width of the first belt ply (24).

12. A method for reinforcing a crown area of a tire (10), the method comprising the steps of:
extending a carcass ply (12) from a first bead portion (14) to a second bead portion (14);
placing a belt structure radially outward of the carcass ply (12) in the crown area of the tire (10), the belt structure including a first belt ply (24), a second belt ply (25), an overlay ply (26), a first wrap around strip (244), and a second wrap around strip (254);
encompassing one or each axial edge of the first belt ply (24) with the first wrap around strip (244);
encompassing one or each axial edge of the second belt ply (25) with the second wrap around strip (254;
axially overlapping one or each axial edge of the overlay ply (26) with a radially outer portion of the first wrap around strip (244); and
axially overlapping a radially inner portion of a first wrap (244) around strip with a radially outer portion of the second wrap around strip (254);
wherein the overlay ply (26) has an axial width less than a maximum axial width of the first belt ply (24) and a maximum axial width of the second belt ply (25); and
wherein the overlay ply (26) is in contact with each first wrap around strip (244) over a lateral distance in a range of from 1 to 5 percent of the lateral width of the overlay belt ply (26).

13. The method as set forth in claim 12, wherein radially outer portions of the one or two first wrap around strips (244) directly contact axially outer edges of the overlay ply (26).

14. The method as set forth in claim 12 or 13, wherein radially inner portions of the one or two first wrap around strips (244) directly contact radially outer portions of the respective one or two second wrap around strip (254).

## Patentansprüche

1. Reifen, der eine Karkassenlage (12) und einen Gürtelaufbau, der radial außerhalb der Karkassenlage (12) in einem Zenitabschnitt des Reifens (10) angeordnet ist, umfasst, wobei der Gürtelaufbau eine erste Gürtellage (24), eine zweite Gürtellage (25), die radial an die erste Gürtellage (24) angrenzt, und eine Überlagerungslage (26), die radial an die erste Gürtellage (24) angrenzt, umfasst, wobei ein erstes zum Aufwickeln bestimmtes Band (244) eine axiale Kante oder beide axiale Kanten (242) der ersten Gürtellage (24) umschließt, und ein zweites zum Aufwickeln bestimmtes Band (254) eine axiale Kante oder beide axiale Kanten der zweiten Gürtellage (25) umschließt, und wobei die Überlagerungslage (26) eine axiale Breite aufweist, die geringer ist als eine maximale axiale Breite der ersten Gürtellage (24) und als eine maximale axiale Breite der zweiten Gürtellage (25), **dadurch gekennzeichnet, dass** die Überlagerungslage (26) mit jedem ersten zum Aufwickeln bestimmten Band (244) über eine seitliche Strecke in einem Bereich von 1 bis 5 Prozent der seitlichen Breite der zum Überlagern bestimmten Gürtellage (26) in Kontakt ist.

2. Reifen nach Anspruch 1, wobei das erste zum Aufwickeln bestimmte Band (244) und/oder das zweite zum Aufwickeln bestimmte Band (254) mindestens einen von Verstärkungskorden, Verstärkungsfasern oder Verstärkungsgewebe enthält.

3. Reifen nach mindestens einem der vorhergehenden Ansprüche, wobei radial äußere Abschnitte des ersten zum Aufwickeln bestimmten Bandes (244) äußere Kanten der Überlagerungslage (26) axial überlappen.

4. Reifen nach mindestens einem der vorhergehenden Ansprüche, wobei radial innere Abschnitte des ersten zum Aufwickeln bestimmten Bandes (244) radial äußere Abschnitte des zweiten zum Aufwickeln bestimmten Bandes (254) axial überlappen.

5. Reifen nach mindestens einem der vorhergehenden Ansprüche, wobei der Reifen (10) einen Luftreifen des Typs, der die Weiterfahrt nach einer Reifenpanne oder Luftentleerung ermöglicht, ist und/oder wobei der Reifen (10) einen Seitenwandeinsatz (20) aufweist, um dem Reifen (10) während des Betriebs mit zu niedrigem Luftdruck und ohne Luft Unterstützung zu geben.

6. Reifen nach mindestens einem der vorhergehenden Ansprüche, wobei jedes erste zum Aufwickeln bestimmte Band (244) sich auf der radialen oberen Seite der ersten Gürtellage (24) über eine seitliche Strecke von 2 bis 10 Prozent, vorzugsweise 3 bis 7 Prozent, der seitlichen Breite der ersten Gürtellage (24) erstreckt.

7. Reifen nach mindestens einem der vorhergehenden Ansprüche, wobei jedes erste zum Aufwickeln bestimmte Band (244) sich auf der radial äußeren Seite der ersten Gürtellage (24) über eine seitliche Strecke erstreckt, der geringer, vorzugsweise 5 bis 15 Prozent geringer, ist als die jeweilige Strecke auf der radial inneren Seite der ersten Gürtellage (24).

8. Reifen nach mindestens einem der vorhergehenden Ansprüche, wobei die Überlagerungslage (26) mit jedem ersten zum Aufwickeln bestimmten Band (244) über eine seitliche Strecke in einem Bereich von 2 bis 4 Prozent der seitlichen Breite der zum Überlagern bestimmten Gürtellage (26) in Kontakt ist.

9. Reifen nach mindestens einem der vorhergehenden Ansprüche, wobei jedes zweite zum Aufwickeln bestimmte Band (254) sich auf der radialen oberen Seite der zweiten Gürtellage (25) über eine axiale Strecke in einem Bereich von 2 bis 10 Prozent, vorzugsweise 3 bis 7 Prozent, der seitlichen Breite der zweiten Gürtellage (25) erstreckt.

10. Reifen nach mindestens einem der vorhergehenden Ansprüche, wobei jedes zweite zum Aufwickeln bestimmte Band (254) sich auf der radial äußeren Seite der zweiten Gürtellage (25) über eine seitliche Strecke erstreckt, der höher, vorzugsweise 15 bis 40 Prozent höher, ist als die jeweilige Strecke auf der radial inneren Seite der zweiten Gürtellage (25).

11. Reifen nach mindestens einem der vorhergehenden Ansprüche, wobei die radial innere Seite des ersten zum Aufwickeln bestimmten Bandes (244) und die radial äußere Seite des zweiten zum Aufwickeln bestimmten Bandes (254) aneinander angrenzen und sich teilweise überlappen; und/oder wobei jedes zweite zum Aufwickeln bestimmte Band (254) sich auf der radial oberen Seite der zweiten Gürtellage (25) seitlich unter dem ersten zum Aufwickeln bestimmten Band (244) über eine seitliche Strecke in einem Bereich von 0,5 bis 3 Prozent der seitlichen Breite der ersten Gürtellage (24) erstreckt.

12. Verfahren zur Verstärkung eines Zenitbereichs eines Reifens (10), wobei das Verfahren die folgenden Schritte umfasst:
das Verlängern einer Karkassenlage (12) von einem ersten Wulstabschnitt (14) zu einem zweiten Wulstabschnitt (14);
das Anordnen einer Gürtelstruktur radial außerhalb der Karkassenlage (12) in dem Zenitbereich des Reifens (10), wobei die Gürtelstruktur eine erste Gürtellage (24), eine zweite Gürtellage (25), eine Überlagerungslage (26), einen ersten zum Aufwickeln bestimmten Band (244) und einen zweiten zum Aufwickeln bestimmten Band (254) umfasst;
das Umschließen einer oder jeder axialen Kante der ersten Gürtellage (24) mit dem ersten zum Aufwickeln bestimmten Band (244);
das Umschließen einer oder jeder axialen Kante der zweiten Gürtellage (25) mit dem zweiten zum Aufwickeln bestimmten Band (254);
das axiale Überlappen einer oder jeder axialen Kante der Überlagerungslage (26) mit einem radial äußeren Abschnitt des ersten zum Aufwickeln bestimmten Bandes (244); und
das axiale Überlappen eines radial inneren Teils eines ersten zum Aufwickeln bestimmtes Bandes (244) mit einem radial äußeren Teil des zweiten zum Aufwickeln bestimmten Bandes (254);
wobei die Überlagerungslage (26) eine axiale Breite aufweist, die geringer ist als eine maximale axiale Breite der ersten Gürtellage (24) und als eine maximale axiale Breite der zweiten Gürtellage (25); und
wobei die Überlagerungslage (26) mit jedem ersten zum Aufwickeln bestimmten Band (244) über eine seitliche Strecke in einem Bereich von 1 bis 5 Prozent der seitlichen Breite der zum Überlagern bestimmten Gürtellage (26) in Kontakt ist.

13. Verfahren nach Anspruch 12, wobei radial äußere Abschnitte des einen ersten zum Aufwickeln bestimmten Bandes oder der beiden ersten zum Aufwickeln bestimmten Bänder (244) die axial äußeren Kanten der Überlagerungslage (26) direkt berühren.

14. Verfahren nach Anspruch 12 oder 13, bei dem radial innere Abschnitte des einen ersten zum Aufwickeln bestimmten Bandes oder der beiden ersten zum Aufwickeln bestimmten Bänder (244) radial äußere Abschnitte jeweils des einen zweiten zum Aufwickeln bestimmten Bandes oder der beiden zweiten zum Aufwickeln bestimmten Bänder (254) direkt berühren.

## Revendications

1. Bandage pneumatique qui comprend une nappe de carcasse (12) et une structure de ceintures qui est disposée, dans la direction radiale, à l'extérieur de la nappe de carcasse (12) dans une portion faisant office de sommet du bandage pneumatique (10), la structure de ceintures englobant une première nappe de ceinture (24), une deuxième nappe de ceinture (25) adjacente, dans la direction radiale, à la première nappe de ceinture (24), une nappe de recouvrement (26) adjacente, dans la direction radiale, à la première nappe de ceinture (24), dans lequel une première bande (244) destinée à un enveloppement englobe un ou les deux bords axiaux (242) de la première nappe de ceinture (24) et une deuxième bande (254) destinée à un enveloppement englobe un ou deux bords axiaux (242) de la deuxième nappe de ceinture (25) ; et dans lequel la nappe de recouvrement (26) possède une largeur axiale qui est inférieure à une largeur axiale maximale de la première nappe de ceinture (24) et à une largeur axiale maximale de la deuxième nappe de ceinture (25), **caractérisé en ce que** la nappe de recouvrement (26) est mise en contact avec chaque première bande (244) destinée à un enveloppement sur une distance latérale qui se situe dans une plage allant de 1 à 5 pour cent de la largeur latérale de la nappe de ceinture faisant office de recouvrement (26).

2. Bandage pneumatique selon la revendication 1, dans lequel la première bande (244) destinée à un enveloppement et/ou la deuxième bande (254) destinée à un enveloppement englobe/nt au moins un élément choisi parmi des câblés de renforcement, des fibres de renforcement ou du tissu de renforcement.

3. Bandage pneumatique tel qu'indiqué dans au moins une des revendications précédentes, dans lequel des portions externes, dans la direction radiale, de la première bande (244) destinée à un enveloppement chevauchent, dans la direction axiale, les bords externes de la nappe de recouvrement (26).

4. Bandage pneumatique tel qu'indiqué dans au moins une des revendications précédentes, dans lequel des portions internes, dans la direction radiale, de la première bande (244) destinée à un enveloppement chevauchent, dans la direction axiale, des portions externes de la deuxième bande (254) destinée à un enveloppement.

5. Bandage pneumatique tel qu'indiqué dans au moins une des revendications précédentes, dans lequel le bandage pneumatique (10) est un bandage pneumatique du type qui permet de poursuivre la route après crevaison ou dégonflement et/ou dans lequel le bandage pneumatique (10) englobe un insert de flanc (20) qui est destiné à procurer au bandage pneumatique (10) un support au cours d'une mise en service du bandage pneumatique (10) à l'état sous gonflé ou à l'état dégonflé.

6. Bandage pneumatique tel qu'indiqué dans au moins une des revendications précédentes, dans lequel chaque première bande (244) destinée à un enveloppement s'étend sur le côté supérieur, dans la direction radiale, de la première nappe de ceinture (24) sur une distance latérale qui représente de 2 à 10 pour cent, de préférence de 3 à 7 pour cent, de la largeur latérale de la première nappe de ceinture (24).

7. Bandage pneumatique tel qu'indiqué dans au moins une des revendications précédentes, dans lequel chaque première bande (244) destinée à un enveloppement s'étend sur le côté externe, dans la direction radiale, de la première nappe de ceinture (24) sur une distance latérale qui est inférieure, de préférence inférieure à raison de 5 à 15 pour cent, à la distance respective sur le côté interne, dans la direction radiale, de la première nappe de ceinture (24).

8. Bandage pneumatique tel qu'indiqué dans au moins une des revendications précédentes, dans lequel la nappe de recouvrement (26) est mise en contact avec chaque première bande (244) destinée à un enveloppement sur une distance latérale qui se situe dans une plage qui représente de 2 à 4 pour cent de la largeur latérale de la nappe de ceinture faisant office de recouvrement (26).

9. Bandage pneumatique tel qu'indiqué dans au moins une des revendications précédentes, dans lequel chaque deuxième bande (254) destinée à un enveloppement s'étend sur le côté supérieur, dans la direction radiale, de la deuxième nappe de ceinture (25) sur une distance axiale qui se situe dans une plage qui représente de 2 à 10 pour cent, de préférence de 3 à 7 pour cent, de la largeur latérale de la deuxième nappe de ceinture (25).

10. Bandage pneumatique tel qu'indiqué dans au moins une des revendications précédentes, dans lequel chaque deuxième bande (254) destinée à un enveloppement s'étend sur le côté externe, dans la direction radiale, de la deuxième nappe de ceinture (25) sur une distance latérale qui est supérieure, de préférence supérieure à raison de 15 à 40 pour cent, à la distance respective sur le côté interne, dans la direction radiale, de la deuxième nappe de ceinture (25).

11. Bandage pneumatique tel qu'indiqué dans au moins une des revendications précédentes, dans lequel le côté interne, dans la direction radiale, de la première bande (244) destinée à un enveloppement et le côté externe, dans la direction radiale, de la deuxième bande (254) destinée à un enveloppement sont adjacents l'un à l'autre et se chevauchent en partie ; et/ou dans lequel chaque deuxième bande (254) destinée à un enveloppement s'étend sur le côté supérieur, dans la direction radiale, de la deuxième nappe de ceinture (25) en direction latérale, en dessous de la première bande (244) destinée à un enveloppement sur une distance latérale qui se situe dans une plage qui représente de 0,5 à 3 pour cent de la largeur latérale de la première nappe de ceinture (24).

12. Procédé destiné au renforcement d'une zone de sommet d'un bandage pneumatique (10), le procédé comprenant les étapes dans lesquelles :
on étend une nappe de carcasse (12) à partir d'une première portion (14) faisant office de talon jusqu'à une deuxième portion (14) faisant office de talon ;
on place une structure de ceintures, dans la direction radiale, à l'extérieur de la nappe de carcasse (12) dans la zone de sommet du bandage pneumatique (10), la structure de ceintures englobant une première nappe de ceinture (24), une deuxième nappe de ceinture (25), une nappe de recouvrement (26), une première bande (244) destinée à un enveloppement et une deuxième bande (254) destinée à un enveloppement ;
on recouvre un bord axial de la première nappe de ceinture (24) ou chacun de ces derniers avec la première bande (244) destinée à un enveloppement ;
on recouvre un bord axial de la deuxième nappe de ceinture (25) ou chacun de ces derniers avec la deuxième bande (254) destinée à un enveloppement ;
on fait se chevaucher, dans la direction axiale, un bord axial de la nappe de recouvrement (26) ou chacun de ces derniers avec une portion externe, dans la direction radiale, de la première bande (244) destinée à un enveloppement ; et
on fait se chevaucher, dans la direction axiale, une portion interne, dans la direction radiale, d'une première bande (244) destinée à un enveloppement avec une portion externe, dans la direction radiale, de la deuxième bande (254) destinée à un enveloppement ;
dans lequel la nappe de recouvrement (26) possède une largeur axiale qui est inférieure à une largeur axiale maximale de la première nappe de ceinture (24) et à une largeur axiale maximale de la deuxième nappe de ceinture (25) ; et
dans lequel la nappe de recouvrement (26) est mise en contact avec chaque première bande (244) destinée à un enveloppement sur une distance latérale qui se situe dans une plage allant de 1 à 5 pour cent de la largeur latérale de la nappe de ceinture faisant office de recouvrement (26).

13. Procédé tel qu'indiqué dans la revendication 12, dans lequel des portions externes, dans la direction radiale, de ladite une ou de deux première bandes (244) destinée(s) à un enveloppement entrent directement en contact, dans la direction axiale, avec des bords externes de la nappe de recouvrement (26).

14. Procédé tel qu'indiqué dans la revendication 12 ou 13, dans lequel des portions internes, dans la direction radiale de ladite une ou de deux premières bandes (244) destinée(s) à un enveloppement entrent directement en contact, dans la direction axiale, avec des portions externes, dans la direction radiale, respectivement de ladite une ou des deux deuxièmes bandes (254) destinées à un enveloppement.
